# EUROPÄISCHE PATENTANMELDUNG

(11) **EP 2 510 790 A1**
(43) Veröffentlichungstag der Anmeldung: **17.10.2012**
(21) Anmeldenummer: 11183149.1
(22) Anmeldetag: 28.09.2011
(51) Int. Cl.: A21B 1/10, A21B 3/15

(54) **Steinplatte für Backöfen**

(30) Priorität: 11.04.2011 DE 102011016678
(71) Anmelder: Daub Backtechnik GmbH, 21160 Hamburg (DE)
(72) Erfinder: Rücker, Andreas, 21039 Börnsen (DE)
(74) Vertreter: Glawe, Delfs, Moll

(57) **Zusammenfassung**

Die Erfindung betrifft Steinplatten (1) für Backöfen (20) sowie einen Backofen (20). Die erfindungsgemäße Steinplatte (1) weist eine Oberseite (2) und einer Unterseite (3) auf, wobei die Unterseite (3) derart profiliert ist, dass bei Auflegen der Steinplatte (1) auf die profilierte Oberseite (13) eines Heizelementes (10) der Bereich zwischen der Steinplatte (1) und dem Heizelement (10) hohlraumfrei ist. Der erfindungsgemäße Backofen (20) umfasst wenigstens einem Heizelement (10) mit profilierter Oberseite (13) und einer auf dem Heizelement (10) aufliegenden Steinplatte (1), wobei der Bereich zwischen der Heizplatte (10) und der Steinplatte (1) hohlraumfrei ist.

## Beschreibung

Die Erfindung betrifft Steinplatten für Backöfen. Die Erfindung betrifft weiterhin Backöfen mit Steinplatten.

Es ist bekannt, Backwaren in Steinöfen zu backen. Die zu backenden Teiglinge werden dabei auf einen erhitzen Stein bzw. eine Steinplatte abgelegt. Nach einer vorgegebenen Backdauer sind die Teiglinge fertig gebacken und werden aus dem Ofen entnommen. Steinöfen sorgen bspw. bei Brot gute Krusteneigenschaften. Ein Produkthinweis wie z. B. "Im Steinofen gebacken" wird als Qualitätsmerkmal einer Backware aufgefasst.

Es sind Backöfen bekannt, bei denen Steinplatten direkt und lose auf stationäre Heizelemente aufgelegt sind. Die Heizelemente weisen in der Regel keine ebene Oberfläche auf, sodass ein mechanischer Kontakt zwischen Heizelement und der darauf liegenden Steinplatte nur in Teilbereichen besteht. In den übrigen Bereichen befindet sich Luft zwischen dem Heizelement und der darauf liegenden Steinplatte. Da diese Luft als Isolator wirkt, ist der Wärmeübergang von dem Heizelement zu der Steinplatte beeinträchtigt.

Ausgehend von diesem Stand der Technik liegt der Erfindung die Aufgabe zugrunde, eine Steinplatte für einen Backofen sowie eine Backofen zu schaffen, bei der die im Stand der Technik bekannten Nachteile nicht oder nur noch in verminderten Umfang auftreten. Gelöst wird diese Aufgabe durch eine Steinplatte gemäß dem Hauptanspruch bzw. durch einen Backofen gemäß dem nebengeordneten Anspruch. Vorteilhafte Weiterbildungen sind Gegenstand der abhängigen Ansprüche.

Demnach betriff die Erfindung eine Steinplatte für Backöfen mit einer Oberseite und einer Unterseite, wobei die Unterseite der Steinplatte derart profiliert ist, dass bei Auflegen der Steinplatte auf die profilierte Oberseite einer Heizplatte der Bereich zwischen der Steinplatte und der Heizplatte hohlraumfrei ist.

Die Erfindung betrifft weiterhin einen Backofen mit wenigstens einem Heizelement mit profilierter Oberseite und einer auf dem Heizelement aufliegenden Steinplatte, wobei der Bereich zwischen der Heizplatte und der Steinplatte hohlraumfrei ist.

"Profiliert" im Sinne dieser Erfindung bedeutet, dass eine entsprechende Oberfläche nicht eben bzw. plan ist.

"Hohlraumfrei" im Sinne dieser Erfindung bedeutet, dass ein entsprechender Bereich keinen luftgefüllten Hohlraum aufweist.

Indem erfindungsgemäß vorgesehen ist, dass luftgefüllte Hohlräume zwischen dem Heizelement und der Steinplatte vermieden werden, wird der Wärmeübergang vom Heizelement auf die Steinplatte verbessert. In der Folge sinken der Energieaufwand und somit die Kosten, um die Steinplatte über das Heizelement auf eine gewünschte Temperatur zu erhitzen.

Entsprechende Hohlräume in Backöfen können vermieden werden, indem die profilierte Oberseite des Heizelementes mit Füllmaterial, bspw. Eisenspäne, nivelliert wird. Eine Steinplatte wird dann auf die nivellierte, ebene Oberfläche aufgelegt. So wird erreicht, dass sich zwischen der Steinplatte und dem Heizelement kein luftgefüllter Hohlraum befindet.

Alternativ ist es möglich, dass die Steinplatte auf ihrer Unterseite so profiliert ist, dass bei Auflegen der Steinplatte auf die profilierte Oberseite eines Heizelementes der Bereich zwischen der Steinplatte und dem Heizelement hohlraumfrei ist. Die Profilierung der Unterseite der Steinplatte ist also das Negativ der Profilierung der Oberseite des Heizelementes. Die Steinplatte kommt in direkte Anlage mit dem Heizelement, sodass luftgefüllte Hohlräume vermieden werden und ein guter Temperaturübergang zwischen Heizelement und Steinplatte gewährleistet ist.

Die Steinplatte ist bevorzugt aus Steinguss (auch Kunststein genannt). Indem die Steinplatte als Steinguss hergestellt wird, lässt sich die Profilierung der Unterseite einfach erreichen. Der Steinguss kann nämlich in einer Form erfolgen, die eine Negativform der gewünschten Profilierung aufweist. Die gegossene Steinplatte weist dann die gewünschte Profilierung auf.

Es ist auch möglich, die Steinplatte direkt an das Heizelement anzugießen. In diesem Fall ist das Heizelement Teil der Gussform für den Steinguss und verbleibt nach dem Gießen fest mit dem Steinguss verbunden.

Ein typisches Beispiel für Heizelemente mit profilierter Oberseite sind Heizplatten von Thermoöl-Backöfen. Bei entsprechenden Backöfen wird Thermoöl durch einen Heizbrenner o. ä. erhitzt, bevor es durch in einer Heizplatte verlaufende Kanäle geführt wird. Das Thermoöl gibt dabei Wärme an die Heizplatte ab, die Heizplatte wiederum kann die Wärme an eine aufliegende Steinplatte abgeben.

Um den Steinguss beständiger und vor allem bruchfester zu machen, kann vorgesehen sein, dass in den Steinguss ein Gewebe als Armierung eingebettet wird.

Als Material für den Steinguss wird bevorzugt Feinbeton verwendet. Als Gewebe für die Armierung wird vorzugsweise ein Glasfasergewebe verwendet. Die Steinplatte kann bspw. eine Größe von 1 x 1,2 m bis (bzw. oder) 1 x 2 m aufweisen. Die Dicke der Steinplatte beträgt bevorzugt 5 mm.

Es ist bevorzugt, wenn alle im Querschnitt der Steinplatte ggf. vorhandenen Winkel an der profilierten Unterseite der Steinplatte stumpfe Winkel, d. h. Winkel zwischen 120° und 179°, vorzugsweise zwischen 150° und 179°, sind.

Zu Erläuterung des erfindungsgemäßen Backofens wird auf die vorstehenden Ausführungen verwiesen. Bei dem Backofen kann es sich insbesondere um einen Thermoöl-Backofen handeln, bei dem dann das wenigstens eine Heizelement eine Thermoöl-Heizplatte ist.

Die Erfindung wird nun anhand einiger Ausführungsbeispiele unter Bezugnahme auf die beigefügten Zeichnungen beispielhaft beschrieben. Es zeigen:
- Figur 1a, b:: ein erstes Ausführungsbeispiel einer erfindungsgemäβen Steinplatte;
- Figur 2a, b:: Anordnung umfassend die Steinplatte aus Figur 1 und ein Heizelement;
- Figur 3a, b:: ein zweites Ausführungsbeispiel einer erfindungsgemäßen Steinplatte;
- Figur 4:: ein drittes Ausführungsbeispiel einer erfindungsgemäßen Steinplatte;
- Figur 5:: ein erstes Ausführungsbeispiel eines erfindungsgemäβen Backofens; und
- Figur 6:: Detaildarstellung einer Abwandlung des Backofen aus Figur 5.

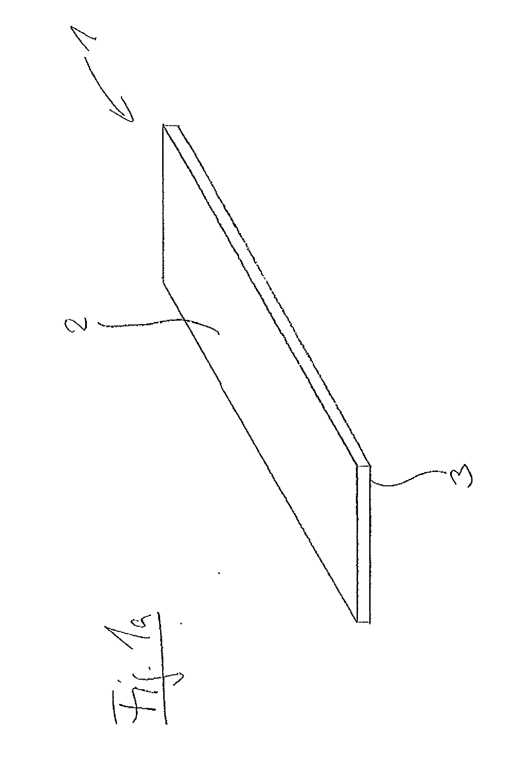

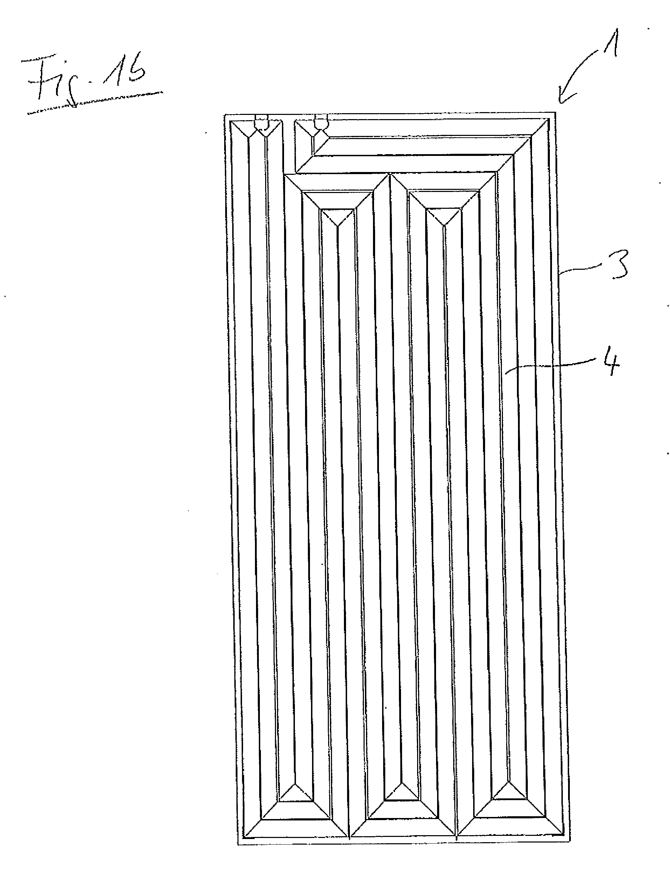

In Figuren 1a, b ist ein erstes Ausführungsbeispiel einer erfindungsgemäßen Steinplatte 1 dargestellt. Figur 1a zeigt dabei eine isometrische Ansicht, in Figur 1b ist die Unterseite der Steinplatte 1 dargestellt.

Die Steinplatte 1 ist aus Steinguss gefertigt und weist eine Oberseite 2 und eine Unterseite 3 auf. Die Oberseite 2 der Steinplatte 1 ist eben ausgeführt, die Unterseite 3 profiliert.

Die Profilierung 4 der Unterseite 3 (vgl. Figur 1b) ist so ausgestaltet, dass nach dem Auflegen der Steinplatte 1 auf ein Heizelement 10 in dem Bereich zwischen Steinplatte 1 und Heizelement 10 kein Hohlraum vorhanden ist.

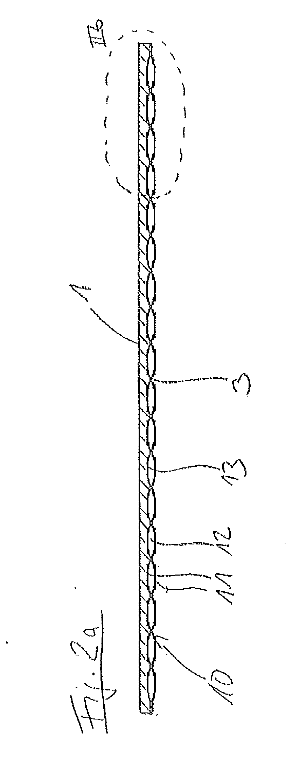

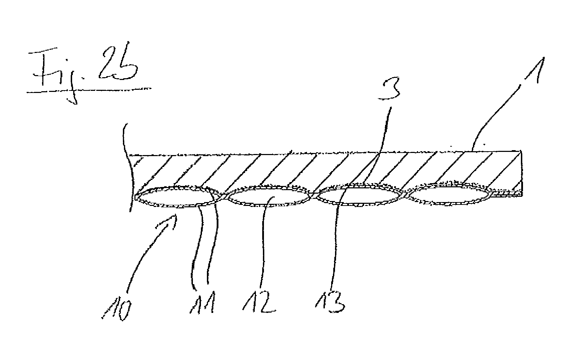

In Figuren 2a, b ist eine Schnittansicht der Steinplatte 1 aus Figur 1a, b nach dem Auflegen auf ein Heizelement 10 gezeigt. Figur 2b ist dabei eine Teilvergrößerung IIb aus Figur 2a.

Bei dem Heizelement 10 handelt es sich um eine Thermoöl-Heizplatte. Das Heizelement 10 ist durch zwei miteinander verschweißte Metallplatten 11 gebildet, die jeweils so tiefgezogen sind, dass beim Zusammenfügen der beiden Metallplatten 11 Kanäle 12 im Innern des Heizelementes 10 gebildet werden, durch die Thermoöl fließen kann. Aufgrund der Bauweise des Heizelementes 10 ergibt sich, dass die Oberseite 13 des Heizelementes 10 profiliert ist.

Die Steinplatte 1 ist an ihrer Unterseite 3 derart profiliert, dass sie das Negativ der Profilierung der Oberseite 13 des Heizelementes 10 darstellt. Durch die passgenaue Profilierung wird vermieden, dass sich luftgefüllte Hohlräume zwischen der Steinplatte 1 und dem Heizelement 10 ergeben. Indem eine mit entsprechenden Hohlräume verbundene Isolationswirkung vermieden wird, wird der Wärmeübergang zwischen Heizelement 10 und Steinplatte 1 verbessert.

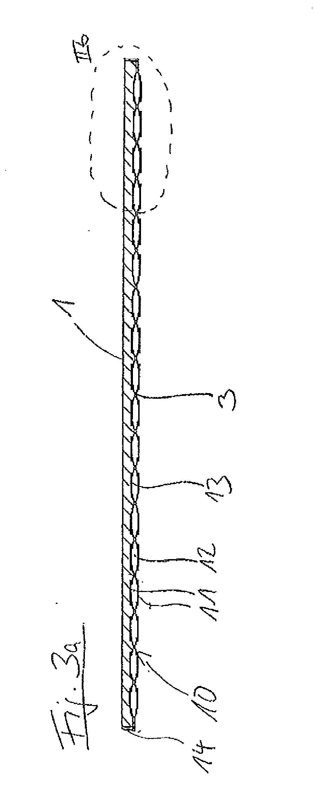

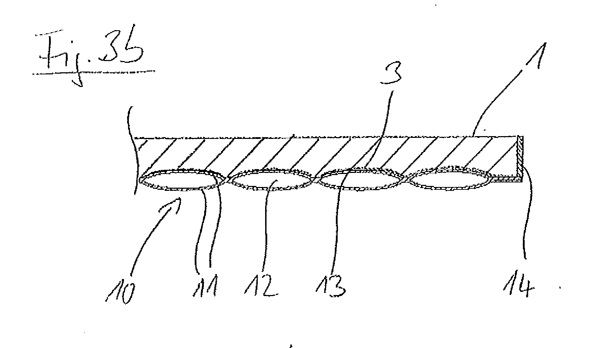

Die Steinplatte 1 aus Steinguss kann in einer Form mit entsprechender Profilierung gegossen werden. Es ist aber auch möglich, dass die Steinplatte 1 direkt an das Heizelement 10 angegossen wird. Eine entsprechende Steinplatte 1 ist in Figuren 3a, b gezeigt, wobei Figur 3b die Vergrößerung IIIb aus Figur 3a zeigt.

Die Heizplatte 10 weist bei dem Ausführungsbeispiel in Figuren 3a, b eine angeschweißte Umrandung 14 auf. Die Umrandung 14 kann auch einstückig mit einer der Metallplatten 11, bspw. durch Tiefziehen, geformt sein. Der durch die Umrandung 14 begrenzte Bereich ist mit flüssigem Steinguss 1 gefüllt worden. Das Heizelement 10 mit der Umrandung 14 bildet dabei die Form für das Gießen. Nach Erstarren des Steingusses wird dieser nicht von der Form gelöst, sondern verbleibt im festen Verbund mit dem Heizelement 10, um eine erfindungsgemäße Steinplatte 1 zu bilden.

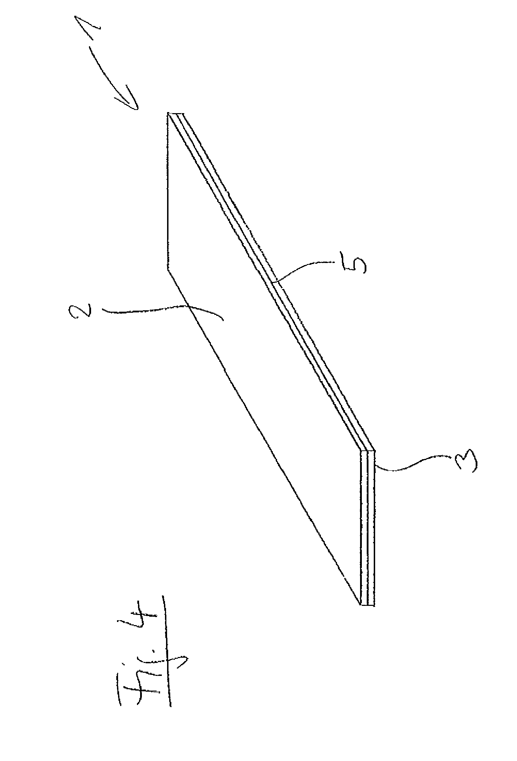

In Figur 4 ist ein weiteres Ausführungsbeispiel einer erfindungsgemäßen Steinplatte 1 dargestellt. Die Steinplatte 1 und insbesondere die Profilierung der Unterseite 3 (nicht dargestellt) ist im Wesentlichen identisch zu der des ersten Ausführungsbeispiels aus Figuren 1a, b und 2a, b, weshalb auf die obigen Ausführungen verwiesen wird.

Die Steinplatte 1 aus Figur 4 unterscheidet sich von derjenigen aus Figuren 1a, b und 2a, b lediglich darin, dass in den Steinguss der Steinplatte ein Gewebe 5 als Armierung eingebettet ist. Durch eine entsprechende Armierung kann die Bruchfestigkeit der Steinplatte 1 deutlich erhöht werden.

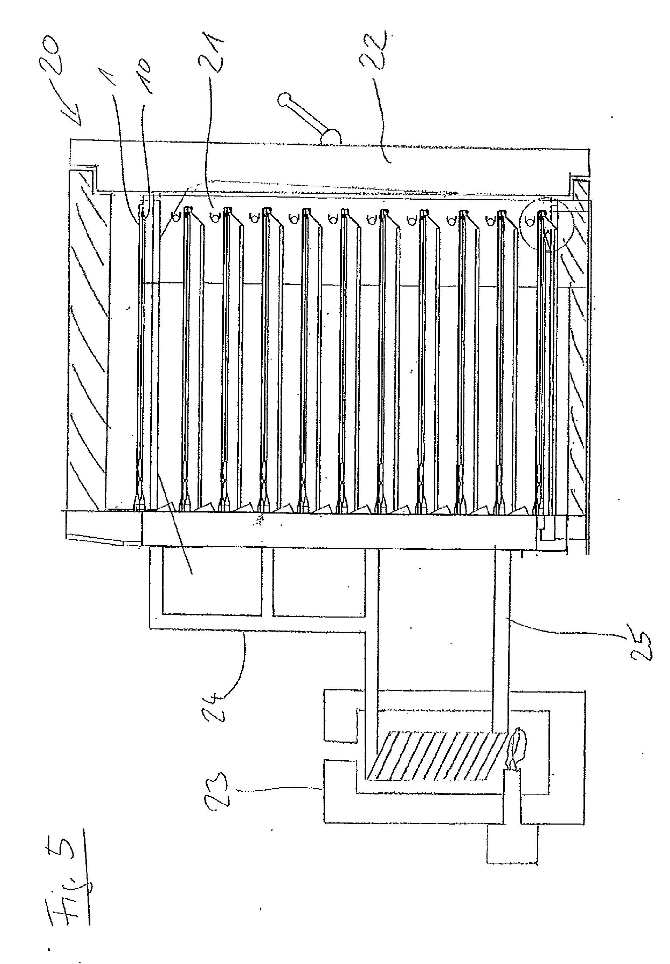

In Figur 5 ist ein erfindungsgemäßer Backofen 20 dargestellt. Der Backofen 20 umfasst einen Backraum 21. Im Backraum 21 sind übereinander mehrere Heizelemente 10 angeordnet. Bei den Heizelementen 10 handelt es sich um Thermoöl-Heizplatten. Auf jedem Heizelement 10 liegt jeweils eine Steinplatte 1 auf. Teiglinge können durch eine Tür 22 in den Backraum 21 eingebracht und entnommen werden.

Des Weiteren umfasst der Backofen 20 noch ein Heizbrenner 23. In diesem Heizbrenner 23 wird Thermoöl erhitzt. Über Rohrleitungen 24 gelangt das heiße Thermoöl zu den Heizelementen 10 und durchströmt diese. Dabei gibt das Thermoöl Wärme an die Heizelemente 10 und in der Folge auch an die Steinplatten 1 ab. Das nach Durchströmen der Heizelemente 10 abgekühlte Thermoöl gelangt über die Rohrleitung 25 zurück zum Heizbrenner 23 und kann dort erneut erhitzt werden. Es liegt also ein geschlossener Thermoöl-Kreislauf vor.

Um einen möglichst optimalen Wärmeübergang zwischen Heizelementen 10 und Steinplatten 1 zu garantieren, ist die Steinplatte 1 beim Backofen 20 in Figur 5 gemäß einem der Ausführungsbeispiele aus Figuren 1 bis 4 ausgebildet. Um Wiederholungen zu vermeiden, wird auf die dortigen Ausführungen verwiesen.

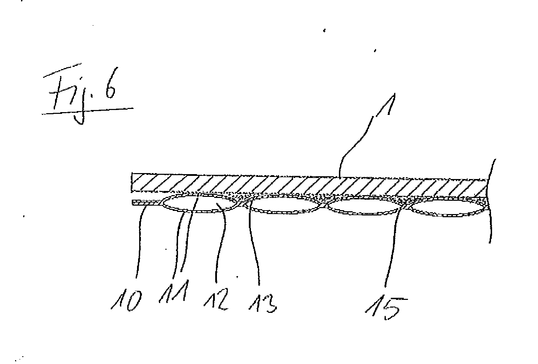

Alternativ ist es - wie in Figur 6 schematisch dargestellt - möglich, dass die profilierte Oberfläche 13 jedes Heizelementes 10 mit Füllmaterial 15 nivelliert wird und anschließend eine Steinplatte 1 mit ebener Unterseite 3 auf das Heizelement 10 aufgelegt wird. Durch das Füllmaterial 15 werden luftgefüllte Hohlräume, die sich aufgrund der Isolationswirkung von Luft negativ auf den Wärmeübergang zwischen Heizelement 10 und Steinplatte 1 auswirken, vermieden. Ist an entsprechenden Stellen Füllmaterial 15 vorgesehen, wird der Wärmeübergang erheblich verbessert. Bei dem Füllmaterial 15 handelt es sich um Eisenspäne.

## Patentansprüche

1. Steinplatte (1) für Backöfen (20) mit einer Oberseite (2) und einer Unterseite (3),
**dadurch gekennzeichnet, dass**
die Unterseite (3) der Steinplatte (1) derart profiliert ist, dass bei Auflegen der Steinplatte (1) auf die profilierte Oberseite (13) eines Heizelementes (10) der Bereich zwischen der Steinplatte (1) und dem Heizelement (10) hohlraumfrei ist.

2. Steinplatte nach Anspruch 1,
**dadurch gekennzeichnet, dass**
die Steinplatte (1) aus Steinguss ist.

3. Steinplatte nach Anspruch 2,
**dadurch gekennzeichnet, dass**
die Steinplatte (1) an das Heizelement (10) angegossen ist.

4. Steinplatte nach Anspruch 3,
**dadurch gekennzeichnet, dass**
das Heizelement (10) eine Thermoöl-Heizplatte ist.

5. Steinplatte nach einem der Ansprüche 2 bis 4,
**dadurch gekennzeichnet, dass**
die Steinplatte (1) ein eingebettetes Gewebe (5) als Armierung aufweist.

6. Backofen (20) mit wenigstens einem Heizelement (10) mit profilierter Oberseite (13) und einer auf dem Heizelement (10) aufliegenden Steinplatte (1),
**dadurch gekennzeichnet, dass**
der Bereich zwischen der Heizplatte (10) und der Steinplatte (1) hohlraumfrei ist.

7. Backofen nach Anspruch 6,
**dadurch gekennzeichnet, dass**
die Steinplatte (1) nach einem der Ansprüche 1 bis 5 ausgebildet ist.

8. Backofen nach Anspruch 6,
**dadurch gekennzeichnet, dass**
die profilierte Oberseite (13) des Heizelementes (10) mit Füllmaterial (15) nivelliert ist.

9. Backofen nach Anspruch 8,
**dadurch gekennzeichnet, dass**
das Füllmaterial (15) Eisenspäne ist.

10. Backofen nach einem der Ansprüche 6 bis 9,
**dadurch gekennzeichnet, dass**
der Backofen (20) ein Thermoöl-Backofen und das wenigstens eine Heizelement (10) eine Thermoöl-Heizplatte ist.
